# EUROPEAN PATENT APPLICATION

(11) **EP 2 120 172 A1**
(43) Date of publication of application: **18.11.2009**
(21) Application number: 08103870.5
(22) Date of filing: 08.05.2008
(51) Int. Cl.: G06F 21/00

(54) **Method and system for legally sharing copyright-protected digital contents**

(71) Applicant: Zentech S.r.l., 10134 Torino (IT)
(72) Inventor: Zucca, Enrico, I-10134, TORINO (IT)
(74) Representative: Maccalli, Marco

(57) **Abstract**

A method of legally sharing digital copyright-protected contents, comprising: at a first data processing apparatus (**110**) of a first user having a digital copyright-protected content available for sharing: at least partly encrypting the digital copyright-protected content in a first form that is not decryptable by the first user; and causing the digital copyright-protected content encrypted in the first form to be made available to a second user wishing to at least temporarily enjoying the digital copyright-protected content, without retaining the digital copyright-protected content in a form usable by the first user for enjoying it; at a second data processing apparatus (**105**) of the second user: receiving the digital copyright-protected content encrypted in a second form decryptable by the second user; decrypting the received encrypted digital copyright-protected content, and at least temporarily enjoying it; upon request of the second user or in any case upon expiry of a predetermined time, automatically causing the digital copyright-protected content to be no longer enjoyable by the second user, wherein after the digital copyright-protected content is no longer enjoyable by the second user, the capability of fruition of the digital copyright-protected content by the first user is automatically re-established.

## Description

### Background Of the invention

The present invention relates to a method and a system for sharing copyright-protected digital contents legally, *i*.*e*., without violating copy rights, particularly over data networks.

### Description of the related art

The Internet is disseminated of contents, in electronic, digital form, that are often protected by copy rights. Such contents include for example music, literary works like books, newspapers or technical articles, movies, pictures, software (this list is not exhaustive, and is merely exemplificative).

Copyright defines the exclusive legal right of some entity owning it to reproduce, publish, sell, or distribute the protected content. Enforcement of copy rights is a major problem when the protected contents are made available in digital form on the Internet, and distribution of the digital contents in violation of the copyright, apart from being illegal, is a source of great concern for the music and film industries, for publishers, and for artists, due to the substantial economical damages it causes.

On the other hand, the benefits deriving from the possibility of distributing/sharing the digital contents on-line, through data networks like the Internet, are evident.

Digital Rights Management (DRM) technologies are often used by publishers and copyright holders to limit the usage of digital contents. Generally, DRM attempts to control the use of digital media by preventing access, copying or conversion to other formats by end users.

Microsoft Corporation is offering a solution, called "Digital Asset Server" (DAS), specifically designed for the DRM of e-books. Third-party companies rely on the DAS technology for providing services for the digital contents conversion, distribution and DRM of copyright-protected digital contents.

The service "Google Book Search" offered by the renown Web search engine "Google" allows users to look on-line for a book, by means of a keyword search, and, if the search criteria are met, to see a preview of the book, and in some cases to see the entire text, provided that the book is out of copyright, or the publisher has given permission; if the book is in the public domain, the user is free to download a PDF (Portable Data Format) copy of it.

The published US patent application No. 2006/0200865 discloses a system, service, and method for enabling authorized use of distributed content on a protected media. The protected content distribution system utilizes media-based copy protection to support online distribution of protected content in a secure and legitimate fashion. Using a media-based copy protection scheme based on broadcast encryption, the protected content distribution system realizes online distribution of protected content such as, for example, audio files, movies, etc, authorizing consumption of unlicensed content by transfer of a unique encrypted key to the protected media. The transaction involves the transfer of an encrypted binding key rather than the protected content. Content is enabled through a unique encrypted key on protected media accessed through a device separate from the media driver.

The International application No. WO 2002/060110 discloses an apparatus, method and system for accessing digital rights management information. It is a DRM and content distribution system that uses the Digital Object Identifier (DOI) as a unique identifier for the works of authorship that are the subject of transactions within the system and that travel with the instantiations of the works of authorship. A method of accessing a digital work from a computer associates at least one usage right with the digital work to create a protected digital work. The usage rights include displaying the digital work, copying the digital work, forwarding the digital work to another computer, or printing the digital work. The method selects a unique identifier such as a DOI for the digital work and stores the protected digital work and the unique identifier in a directory such as a library of digital works of authorship or a portion of a peer-to-peer network. The method issues a query from the computer to the directory to generate a result set that includes the unique identifier. The method uses the unique identifier to retrieve the protected digital work from the directory.

In the published US patent application No. 2006/0010075, a technique for facilitating resale of a digital content purchased via an electronic commerce transaction over a computer network is disclosed.

### Summary of the invention

The Applicant has tackled the problem of how to enable legal distribution and sharing of digital contents protected by copyrights, particularly through data networks like the Internet, preserving the rights of copy of the legitimate owner of the copyright.

The Applicant has found that a solution to this problem can reside in setting up a mechanism which, generally stated, reproduces what normally occurs in a library: the library may detain a copy of a book, which can be loaned to several library subscribers but only to one of them at a time; the number of circulating copies of the book does not change, thus the rights of copy are not violated, and at the same time several readers may enjoy the reading of the book.

According to an aspect of the present invention, a method of legally sharing digital copyright-protected contents is provided, comprising:
- at a first data processing apparatus of a first user having a digital copyright-protected content available for sharing:

- at least partly encrypting the digital copyright-protected content in a first form that is not decryptable by the first user; and
- causing the digital copyright-protected content encrypted in the first form to be made available to a second user wishing to at least temporarily enjoying the digital copyright-protected content, without retaining the digital copyright-protected content in a form usable by the first user for enjoying it;
- at a second data processing apparatus of the second user:

- receiving the digital copyright-protected content encrypted in a second form decryptable by the second user;
- decrypting the received encrypted digital copyright-protected content, and
- at least temporarily enjoying it;
- upon request of the second user or upon expiry of a predetermined time, automatically causing the digital copyright-protected content to be no longer enjoyable by the second user,
wherein after the digital copyright-protected content is no longer enjoyable by the second user, the capability of fruition of the digital copyright-protected content by the first user is automatically re-established.

Advantageously, an asymmetric cryptography is used in the procedures for sharing digital copyright-protected contents; the use of asymmetric cryptography has the advantage of ensuring that the digital copyright-protected content cannot be illegally duplicated.

Said first form may be decryptable by a third data processing apparatus, and the method may further comprise:
- at the third data processing apparatus:

- receiving over a data transfer link from the first data processing apparatus at least a first part of the digital copyright-protected content encrypted in the first form, wherein said at least a first part includes information adapted to enable the fruition of the digital copyright-protected content,
- decrypting the received a first part of the digital copyright-protected content encrypted in the first form,
- encrypting the decrypted at least a first part of the digital copyright-protected content into the second form, and
- sending over a data transfer link the at least a first part of the digital copyright-protected content encrypted in the second form to the second data processing apparatus.

The method may further comprise:
- at the first data processing apparatus, sending over a data transfer link a second part of the digital copyright-protected content to the second data processing apparatus.

The method may also further comprise:
- - at the first data processing apparatus:
   - encrypting a first part of the digital copyright-protected content in the first form,
   wherein said first part includes information adapted to enable the fruition of the digital copyright-protected content.;
   - sending over a data transfer link to the second data processing apparatus the encrypted first part of the digital copyright-protected content and a second part of the digital copyright-protected content;
      - at the second data processing apparatus:
   - receiving from the first data processing apparatus the encrypted first and second parts of the digital copyright-protected content;
   - sending the encrypted first part of the digital copyright protected content to a third data processing apparatus;
      - at the third data processing apparatus:
         - receiving from the second data processing apparatus the encrypted first part of the digital copyright-protected content;
         - decrypting the encrypted first part of the digital copyright-protected content;
         - encrypting the first part of the digital copyright-protected content into the second form, and
         - sending the encrypted first part of the digital copyright-protected content encrypted in the second form to the second data processing apparatus;
      - at the second data processing apparatus:
         - receiving from the third data processing apparatus the encrypted first part of the digital copyright-protected content encrypted in the second form;
         - decrypting the encrypted first part of the digital copyright-protected content, and
         - enabling the at least temporarily enjoying of the digital copyright-protected content.

Said sending to the second data processing apparatus the second part of the digital copyright-protected content may comprise having the first data processing apparatus encrypting the second part of the digital copyright-protected content in the second form, and said receiving from the first data processing apparatus the second part of the digital copyright-protected content may comprise having the second data processing apparatus decrypting the encrypted second part of the digital copyright-protected content.

Said automatically causing the digital copyright-protected content to be no longer enjoyable by the second user and re-establishing the capability of fruition of the digital copyright-protected content by the first user may comprise:
- at the second data processing apparatus, at least partly encrypting the digital copyright-protected content in a fourth form that is not decryptable by the second user without retaining the digital copyright-protected content in a form usable by the second user for enjoying it;
- at the first data processing apparatus, receiving back over a data transfer link the digital copyright-protected content at least partly encrypted in a fifth form decryptable by the first user, and decrypting the received at least partly encrypted digital copyright-protected content to make it again enjoyable by the first user.

In particular, said fourth form may be decryptable by a third data processing apparatus, and the method may further comprise:
- at the third data processing apparatus, receiving over a data transfer link from the second data processing apparatus the digital copyright-protected content at least partly encrypted in the fourth form, decrypting it, encrypting the decrypted digital copyright-protected content into the fifth form, and sending over a data transfer link the digital copyright-protected content encrypted in the fifth form to the first data processing apparatus.

Said causing the digital copyright-protected content encrypted in the first form to be made available to the second user may comprise storing the digital copyright-protected content on a storage support of the second user.

According to another aspect of the present invention, a system for legally sharing digital copyright-protected contents is provided, comprising:
- a first data processing apparatus of a first user having a digital copyright-protected content available for sharing,
- a second data processing apparatus of a second user wishing to at least temporarily enjoying the digital copyright-protected content,
- the first data processing apparatus being adapted to at least partly encrypting the digital copyright-protected content in a first form that is not decryptable by the first user without retaining the digital copyright-protected content in a form usable by the first user for enjoying it;
- the second data processing apparatus being adapted to receiving the digital copyright-protected content encrypted in a second form decryptable by the second user, decrypting the received encrypted digital copyright-protected content, and at least temporarily enjoying it;
wherein, upon expiry of a predetermined time, the digital copyright-protected content is automatically caused to be no longer enjoyable by the second user and the capability of fruition of the digital copyright-protected content by the first user is automatically re-established.

The system may further comprise a third data processing apparatus adapted to:
- receiving over a data transfer link from the first data processing apparatus at least a first part of the digital copyright-protected content encrypted in the first form, wherein said at least a first part includes information adapted to enable the fruition of the digital copyright-protected content.
- decrypting the received a first part of the digital copyright-protected content encrypted in the first form,
- encrypting the decrypted at least a first part of the digital copyright-protected content into the second form, and
- sending over a data transfer link the at least a first part of the digital copyright-protected content encrypted in the second form to the second data processing apparatus.

The first data processing apparatus may be further adapted to send over a data transfer link a second part of the digital copyright-protected content to the second data processing apparatus.

The first data processing apparatus may be adapted to:
- encrypting a first part of the digital copyright-protected content in the first form,
wherein said first part includes information adapted to enable the fruition of the digital copyright-protected content.;
- sending over a data transfer link to the second data processing apparatus the encrypted first part of the digital copyright-protected content and a second part of the digital copyright-protected content.

The second data processing apparatus may be adapted to:
- receiving from the first data processing apparatus the encrypted first and second parts of the digital copyright-protected content;
- sending the encrypted first part of the digital copyright protected content to a third data processing apparatus.

The third data processing apparatus may be adapted to:
- receiving from the second data processing apparatus the encrypted first part of the digital copyright-protected content;
- decrypting the encrypted first part of the digital copyright-protected content;
- encrypting the first part of the digital copyright-protected content into the second form, and
- sending the encrypted first part of the digital copyright-protected content encrypted in the second form to the second data processing apparatus; - and the second data processing apparatus is further adapted to:
   - receiving from the third data processing apparatus the encrypted first part of the digital copyright-protected content encrypted in the second form;
   - decrypting the encrypted first part of the digital copyright-protected content, and
   - enabling the at least temporarily enjoying of the digital copyright-protected content.

The first data processing apparatus may be adapted to encrypt the second part of the digital copyright-protected content in the second form, and the second data processing apparatus is adapted to decrypt the encrypted second part of the digital copyright-protected content.

Said automatically causing the digital copyright-protected content to be no longer enjoyable by the second user and re-establishing the capability of fruition of the digital copyright-protected content by the first user may comprise:
- at the second data processing apparatus, at least partly encrypting the digital copyright-protected content in a fourth form that is not decryptable by the second user without retaining the digital copyright-protected content in a form usable by the second user for enjoying it;
- at the first data processing apparatus, receiving back over a data transfer link the digital copyright-protected content at least partly encrypted in a fifth form decryptable by the first user, and decrypting the received at least partly encrypted digital copyright-protected content to make it again enjoyable by the first user.

The system may comprise a third data processing apparatus adapted to receiving over a data transfer link from the second data processing apparatus the digital copyright-protected content at least partly encrypted in the fourth form, decrypting it, encrypting the decrypted digital copyright-protected content into the fifth form, and sending over a data transfer link the digital copyright-protected content encrypted in the fifth form to the first data processing apparatus.

### Brief description of the drawings

These and other features and advantages of the present invention will be made apparent by reading the following detailed description of some embodiments thereof, provided merely by way of non-limitative examples, description that will be conducted making reference to the annexed drawings, wherein:
**Figure 1** schematically shows a scenario where the present invention is exploited;
**Figure 2** schematically shows the structure of a generic data processing apparatus;
**Figure 3** schematizes a structure according to an embodiment of the present invention of an electronic file related to a digital copyright-protected content to be legally shared;
**Figure 4A** shows, in terms of functional blocks, the main components of a client software according to an embodiment of the present invention, adapted to be executed by data processing apparatuses of users for legally sharing digital copyright-protected contents;
**Figure 4B** shows, in terms of functional blocks, the main components of a server software according to an embodiment of the present invention, adapted to be executed by one or more server data processing apparatuses managing operations for allowing users to legally share digital copyright-protected contents;
**Figure 5** schematically shows the main actions performed by data processing apparatuses of a loaner and a borrower of a digital copyright-protected content, and by the server, in an embodiment of the present invention;
**Figure 6** shows, in terms of a flowchart, a procedure for the restitution of a borrowed digital copyright-protected content to the loaner, in an embodiment of the present invention;
**Figure 7** shows, in terms of a flowchart, a procedure for the re-establishment of the possibility of fruition of a loaned digital copyright-protected content by the loaner, in an embodiment of the present invention; and
**Figure 8** schematically shows the main actions performed by data processing apparatuses of a loaner and of the server in order to restitute the loaned digital copyright-protected content to the legitimate owner.

### Detailed description of embodiments of the invention

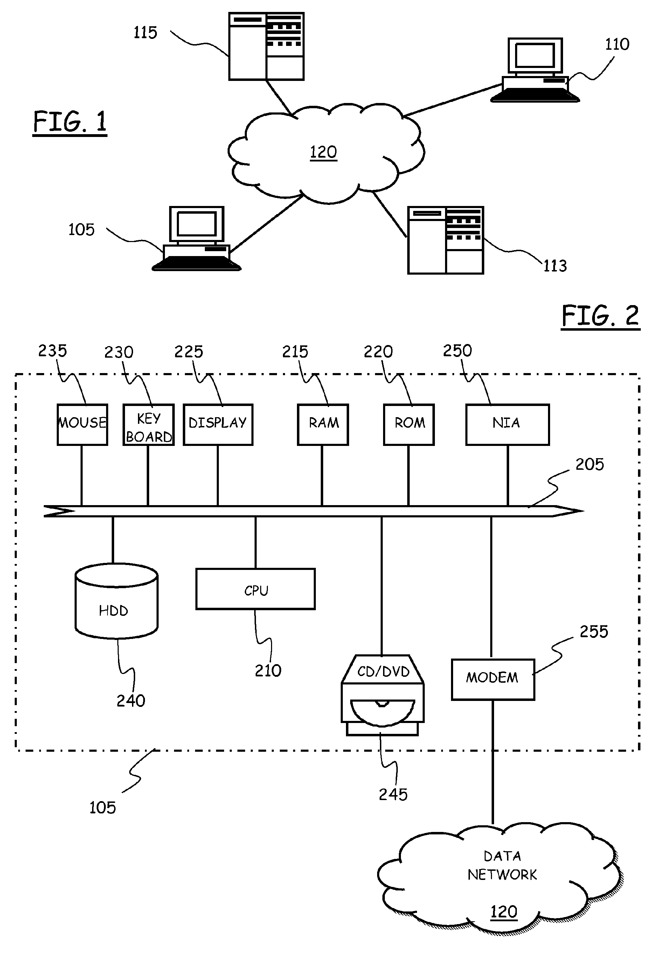

Making reference to the drawings, in **Figure 1** a scenario where the present invention is exploitable is schematically shown. In the figure, reference numeral **105** denotes a data processing apparatus or system (such as a Personal Computer - PC -, a laptop or a palmtop, a smart phone or other similar electronic device) of a first user, who in the following of the present description is assumed to be the subject (the borrower) who intends to borrow a copyright-protected digital content, for example a book, available on-line in digital form (an e-book). Reference numeral **110** denotes instead a data processing apparatus or system (such as a PC, a laptop or a palmtop, a smart phone or other similar device) of a second user, who in the following of the present description is assumed to be the subject (the loaner) who can loan the desired copyright-protected content to the borrower, for example because he/she legitimately owns a copy of the digital copyright-protected content (or, as will be discussed later, because he/she has legitimately borrowed the digital content from some a third party who is the legitimate owner of the digital copyright-protected content, with right to sub-loan). In the following of the present description, either one of the reference numerals **105** and **110** will be used to denote both the borrower, or, respectively, the loaner, and their data processing apparatuses.

Reference numeral **113** denotes a (server) data processing apparatus of a Certification Authority (CA) which, according to an embodiment of the present invention, manages the operations necessary for authentication of ownership and identity ensuring that the digital copyright-protected content can be loaned by a loaner to a borrower without violating the copyright. It is pointed out that although only one authentication authority **113** is considered in the exemplary scenario of **Figure 1****,** for the sake of simplicity, a system of two or more authentication authorities may be provided.

Reference numeral **115** denotes a server apparatus which, according to an embodiment of the present invention, manages the operations necessary for enabling users to share digital copyright-protected contents, while ensuring that the digital copyright-protected content can be loaned by a loaner to a borrower without violating the copyright. It is pointed out that although only one server apparatus **115** is considered in the exemplary scenario of **Figure 1****,** for the sake of simplicity, a system of two or more server apparatuses like the server **115** may be provided, each server serving its own subscribers (the subscribers of each server forming a sub-network of that server); for example, the borrower **105** and the loaner **110** might be subscribers to the same server or to different servers of the system of servers.

The data processing apparatuses **105, 110, 113** and the server apparatus **115** are connected/connectable to a data network **120,** for example the Internet (particularly, the PCs **105** and **110** of the borrower and the loaner may access the Internet through Internet service providers, using modems).

In a possible practical implementation, hereinafter referred to as non-distributed solution, the servers **115** have all the information about the shareable digital contents available in each server's sub-network, *i*.*e*. information about the shareable contents available to each of their subscribers. In another possible practical implementation, hereinafter referred to as distributed solution, no centralized information about the shareable digital contents is retained by the servers of the system of servers **115.** Mixes of the two solutions are possible, or other techniques.

In **Figure 2****,** the general structure of a generic data processing apparatus **200,** like the PCs **105** and **110,** is schematically shown. Several functional units are connected in parallel to a data communication bus **205.** In particular, a Central Processing Unit (CPU) **210,** typically comprising a microprocessor (the CPU may possibly comprise more than one microprocessor), controls the operation of the computer PC; a working memory **215,** typically a Random Access Memory (RAM), is directly exploited by the CPU **210** for the execution of programs and for temporary storage of data, and a Read Only Memory (ROM, possibly being or including one or more among an EPROM, an EEPROM, a Flash memory ) **220** stores a basic program for the bootstrap of the data processing apparatus **200,** as well as other relevant data to be preserved when the power is off. The data processing apparatus **200** comprises several peripheral units, connected to the bus **205** by means of respective interfaces. Particularly, peripheral units that allow an easy and friendly interaction with a human user are provided, such as a display device **225** (for example a CRT - Cathodic Ray Tube -, an LCD - Liquid Crystal Display - or a plasma monitor), a keyboard **230** and a pointing device **235** (for example a mouse or a touchpad or the like). The data processing apparatus **200** also includes peripheral units for local mass-storage of programs and data (*e*.*g*., an operating system, application programs, user files), such as a magnetic Hard-Disk Driver (HDD) **240,** driving magnetic hard disks, and a CD-ROM/DVD driver **245,** for reading/writing CD-ROMs/DVDs. Other peripheral units may be present, such as a floppy-disk driver for reading/writing floppy disks, a memory card reader for reading/writing memory cards, a USB (Universal Serial Bus) interface, a Bluetooth interface, a Firewire interface and the like. The data processing apparatus **200** may be further equipped with a Network Interface Adapter (NIA) **250** and/or a wireless (WiFi) interface, for the connection to a LAN (local Area Network) and/or a WLAN (Wireless LAN); the data processing apparatus **200** also includes or is connected to an external MODEM **255,** for enabling the connection to the data network **120.**

It is pointed out that albeit **Figure 2****,** at least in its essential components (CPU, memory resources, etc.), is illustrative of the general structure of any data processing apparatus, *i*.*e*. of any apparatus having data processing capabilities, some of the components shown in **Figure 2** may be absent in some specific types of data processing apparatuses (for example, a PDA or a smart phone do not have HDDs, CD-ROM/DVD drivers, floppy disk drivers and so on), and/or additional units may be provided (for example, a smart phone includes a circuitry for the communication over a mobile telephony network and an interface for a SIM - Subscriber Identity Module).

According to an embodiment of the present invention, the electronic file or files related to a digital copyright-protected content that is made available on the data network **120** by, *e*.*g*., the loaner **110** for legally sharing it with other people are encoded in a peculiar way, designed to enable the sharing of the digital copyright-protected content without violating the associated copyright.

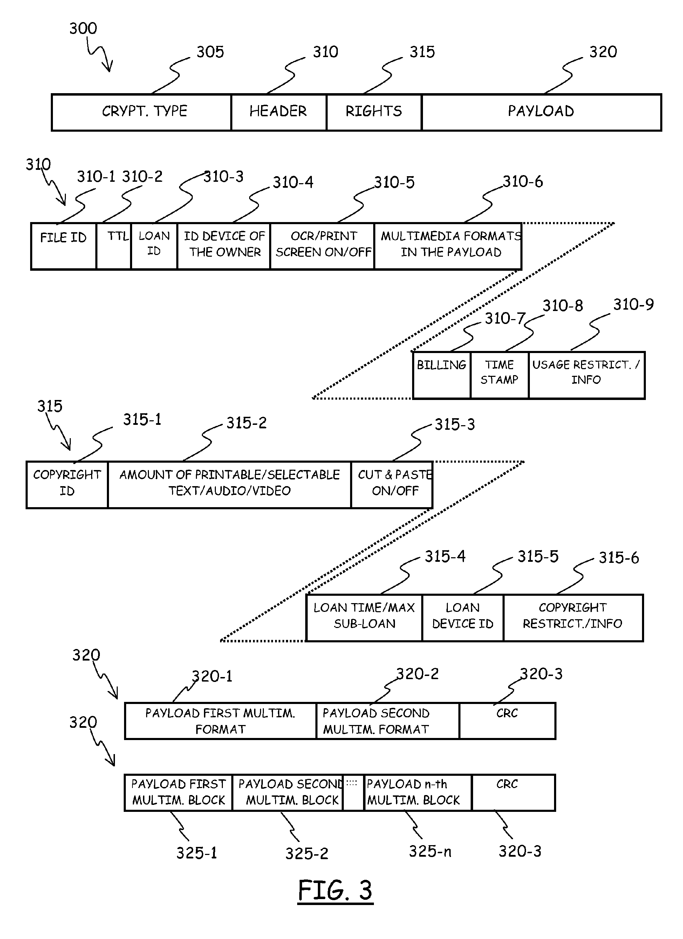

In particular, referring to **Figure 3****,** a possible structure according to an embodiment of the present invention of a file **300** related to a legally sharable digital copyright-protected content is schematized. The file comprises:
- a first field **305** containing information adapted to specify a type of cryptography used to encrypt the file and how to proceed in order to decrypt or make the digital content enjoyable;
- a second field **310** containing a file header;
- a third field **315** containing information adapted to specify the actions a borrower is allowed to perform on the digital copyright-protected content loaned thereto, and
- a fourth field **320** containing the payload, *i*.*e*. the (or at least part of) the digital copyright-protected content.

The second field **310** includes:
- a first sub-field **310-1** containing information adapted to univocally identify the file;
- a second sub-field **310-2** containing data setting a maximum loan time (hereinafter also referred to as Time To Live or TTL);
- a third sub-field **310-3** containing information adapted to univocally identify a level of loan or sub-loan of the digital copyright-protected content (for example, when the digital copyright-protected content is loaned to the borrower directly by the legitimate owner of the digital copyright-protected content, the level of loan is set to 1; when the digital copyright-protected content is loaned to the borrower by a user who has in turn borrowed the digital copyright-protected content by the legitimate owner - with right to sub-loan it -, the level of loan is set to 2, and so on, possibly up to a predetermined maximum level of sub-loans, for example 16); sub-loans can be allowed or not, for example according to what is stated in a Service Level Agreement (SLA) between the entity (possibly, the holder of the copyright) who sold the copy of the digital copyright-protected content to the buyer, for example the loaner **110;** this information may be included in an electronic, digital certificate of ownership released to the buyer of the copy of the copyright-protected content, and issued by an authentication authority, like for example the authentication authority **113** in **Figure 1****;**
- a fourth sub-field **310-4** containing information adapted to univocally identify the device (PC, PDA, smartphone and the like) containing the digital certificate of ownership of the legitimate owner of the copy of the copyright-protected content; this device can be univocally identified using for example the whole digital certificate of ownership (in case this certificate contains also information related to the hardware/software of the buyer's device) or a combination between an identifier of the host who sold to the buyer the copy of the digital copyright-protected content and an identifier of the device of the buyer, or a unique information of the copyright-protected content buyer's device and the digital certificate of ownership, or a portion thereof, or a generic unique information of the buyer's device, like its public encryption key; the sub-field **310-4** is preferably encrypted with a public encryption key of a public-private encryption keys system of the server **115,** or with a common public encryption key of a public-private encryption keys system of the system of servers, including the server **115,** that implement the service of legal sharing of the digital copyright-protected contents, or a temporary encryption key assigned by the server **115;**
- a fifth sub-field **310-5** containing information adapted to specify whether operations like exploiting an Optical Character Recognition (OCR) software to read text contained in the digital copyright-protected content (and thus to create a local copy thereof locally at the data processing apparatus of the borrower), and/or obtaining a printout of the PC screen display, or other external commands/software restriction, are allowed or not to a borrower;
- a sixth sub-field **310-6** containing information about the multimedia formats present in the payload field **320;**
- optionally, a seventh sub-field **310-7** containing billing information, useful for example in the case the fruition of the digital copyright-protected content by a borrower is subjected to the payment of a prescribed amount of money (this sub-field may for example include information about how and how much to pay for the fruition of the copyright-protected content, and/or for performing some actions on it like for example printing it, in case of a literary work;
- an eighth sub-field **310-8** containing time stamps information, like for example the start date (*e*.*g*., in the format hh/dd/mm/yy) of the borrowing, and
- a ninth sub-field **310-9** containing usage information/restrictions (for example, the information contained in this field may specify that the viewing of the digital copyright-protected content may be allowed only to adults, or this field may include information used in order to create list of contents during the query phase - described later on -, in order to restrict the search to a specified subject/restriction, for example for searching only digital copyright-protected contents that have no age's restrictions).

The third field **315** includes:
- a first sub-field **315-1** containing information adapted to univocally identify the digital copyright protecting the content by its digital certificate of ownership, and information related to the device of the owner of the digital copyright-protected content; this sub-field is preferably encrypted with the public encryption key of the server **115,** or a common public encryption key of the system of servers that implement the digital copyright-protected contents sharing service, or the temporary encryption key given by the server **115,** or the public encryption key of the current borrower of the digital copyright-protected content;
- a second sub-field **315-2** containing information adapted to specify the amount of content, e.g. text (in case of literal works) or audio (in case of music files) or video (in case of video or other multimedia files) that can be printed and/or selected (for "cut and paste" operations, for example) and/or recorded by the borrower;
- a third sub-field **315-3** containing information adapted to specify whether "cut and paste" and/or modify operations on the borrowed copyright-protected content are allowed;
- a fourth sub-field **315-4** adapted to contain information specifying a maximum loan time of the digital copyright-protected content (this value may coincide with the TTL in the sub-field **310-2,** in case the loan level is 1, or with the remaining available loan time before the lapse of the TTL, in case of sub-loans), and/or a maximum number of sub-loans that a borrower of the digital copyright-protected content can do (a default value may be 1, indicating that no sub-loans are possible; more generally; in case the level of admissible sub-loans is set to *m* in the sub-field **310-3,** and the considered borrower is the *n*-th borrower, the value in the sub-field **315-4** is set to (*m* - *n*));
- a fifth sub-field **315-5** intended to contain information adapted to univocally identify the device on which the file(s) of the digital copyright-protected content reside(s); this sub-field is preferably encrypted with the public encryption key of the server **115,** or a common public encryption key of the system of servers that implement the digital copyright-protected contents sharing service, or the temporary encryption key assigned by the server **115,** or the public encryption key of the current borrower; in particular, this sub-field contains the identifier of the device (PC, PDA, smartphone and the like) of the current borrower of the digital copyright-protected content; and
- a sixth sub-field **315-6** containing information related to the copyright restrictions/information, for example the owner of the copyright may pose restrictions for the sharing of the digital copyright-protected content in some countries or it can impose the maximum number of available transactions (loans, selling, renting, sharing and the like); this sub-field is preferably encrypted with the public encryption key of the server **115,** or a common public encryption key of the system of servers that implement the contents sharing service, or the temporary encryption key assigned by the server **115;** part of this sub-field can be modified by the server **115** at the end of each loan transaction to increase a counter that keeps track of the number of loans. Using this sub-field it is possible implement different kind of business policies, for example it is possible to sell o loan copyright-protected contents usable only for a predetermined time or a predetermined number of times.

According to an embodiment of the present invention, every digital copyright-protected content is identified by a unique copyright identifier (that could be a combination of the information content of two or more, possibly several of the above described subfields like the sub-fields **315-1, 310-4** and **310-1),** which allows preventing any duplication of the digital copyright-protected content; the sub-field **315-1,** in combination with sub-field(s) **310-4** and/or **315-5,** allows the traceability of the digital copyright-protected content in the data network **120,** so that it is possible to restitute the possibility of fruition of the loaned digital copyright-protected content to the legitimate owner in those cases where the loan time lapses and the borrowed copyright-protected content is not restituted, or the restitution of the copyright-protected content to the loaner does not succeed, as will be described later on.

It is also pointed out that the information contained in the sub-field **310-5** are exploited to enable/inhibit operations of capturing of parts of the digital copyright-protected content exploiting commands typical of an operating system of the data processing apparatus of a borrower (like for example print screen commands, in case of literary works), whereas the information contained in the sub-fieldsl **315-2** and **315-3** are exploited to enable/inhibit similar functionalities but in relation to a client software running on the borrower's data processing apparatus, as described in the following.

The fourth (payload) field **320** contains the digital copyright-protected content to be loaned. This field may include two or more sub-fields **320-1, 320-2,** each of which may contain a different multimedia file format (*e*.*g*., an MP3 file, a WMA file, an MPG or MPEG file, an RM file); audio and/or video files may optionally accompany literary work files, in which case they may for example contain a vocal reading of the text. The content of the payload field **320** may be made up of several blocks **325-1, 325-2, 325-*n*,** for example in case the copyright-protected content to be borrowed is retrieved piecewise from several loaners. A CRC (Cyclic Redundancy Check) sub-field **320-3** may be provided, containing an electronic digest of the content of the other payload sub-fields, useful for assessing the information integrity.

Preferably, the information contained in one or more of the second, third and fourth fields **310, 315** and **320** are encrypted, the type of cryptography used to encrypt the information being specified in the first field **305.** The type of cryptography may specify a public encryption key (of a public-private encryption key pair) which has been used to encrypt the information (for example, the public encryption key of the legitimate owner of the digital copyright-protected content - *e*.*g*. the loaner **110 -** or the public encryption key of the server **115,** or a common public encryption key of the system of servers that implement the digital copyright-protected contents sharing service, or the public encryption key of the borrower **105** (for example, in case of sub-loans) or the temporary encryption key assigned by the server **115,** or a public encryption key of a third party (like the Certification Authority **113** ) used in a server to server borrowing procedure, in case of absence of different servers keys, or in a server storage procedure for downloading and storing the digital copyright-protected content on a server of the server system. The information contained in the first field **305** allows determining the decryption key to be used for decrypting the information or how to proceed in order to show the multimedia content by the software.

It is pointed out that the file structure shown in **Figure 3** is merely exemplary and not limitative, and other file structures are possible.

According to an embodiment of the present invention, a client computer program (client software) is installed on the data processing apparatuses **105** of the borrower and **110** of the loaner.

In general terms, according to an embodiment of the present invention, the client software installed on the data processing apparatus **105** of the borrower, when executed, is adapted to:
- allow the borrower to perform on-line searches on the data network **120** to find contents that the borrower wishes to borrow, and display to the borrower the search results;
- perform a secure exchange of copyright-protected contents borrowed from the loaner, and manage the restitution of the borrowed contents to the loaners at the expiry of a predetermined borrowing time (the TTL or the loan time contained in the file of the copyright-protected content);
- prevent the duplication of electronic files related to the copyright-protected borrowed content, so as to avoid that the borrower makes local copies thereof;
- allow the borrower's fruition of the borrowed digital copyright-protected contents; in particular, for digital contents like literary works (*e*.*g*., books and articles), the client software is adapted to allow the borrower printing at least part of the borrowed digital contents (if this action is allowed by the owner of the copyright, as specified in the file **300);**
- allow the borrower's fruition of the digital copyright-protected content respecting his/her user profile ;
- allow to create ad manage several user's profile;
- allow to convert some digital copyright-protected content into a sharable version.

In preferred invention embodiments, the client software installed on the data processing apparatus **105** of the borrower, when executed, may also be adapted to interface the data processing apparatus **105** with e-commerce Web sites where the borrower may buy his/her own copy of the borrowed digital copyright-protected content and/or interface the data processing apparatus **105** with e-commerce/advertisement Web sites where the borrower may download a temporary or permanent full copy (without any use restriction, for example with the possibility or printing all the pages of an e-book) of the digital copyright-protected content, subject to the acceptance by the borrower to have a permanent or a temporary advertisement on the digital content (for example a logo of a company on each page of the e-book), and/or interface the data processing apparatus **105** of the borrower with e-commerce/advertisement Web sites where the borrower may download some advertisement information that will be displayed on the digital copyright-protected content, and, as a reward, to permit for example to print or copy more text (on each printed page an advertisement or a logo will be impressed).

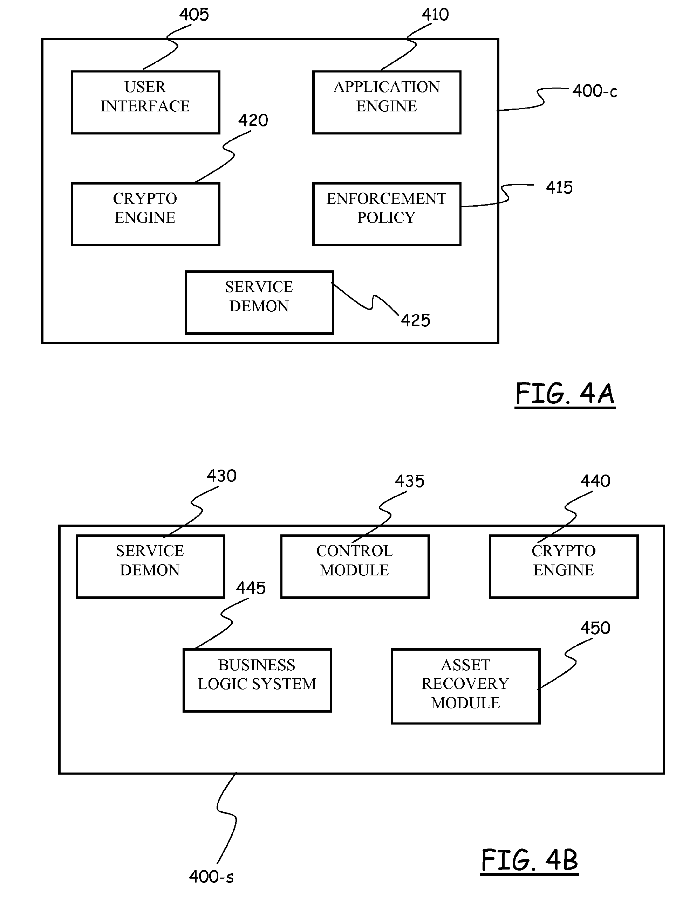

**Figure 4A** schematically shows in terms of functional blocks the main modules of a client software **400-c** according to an embodiment of the present invention.

A user interface module **405** manages the interactions of the data processing apparatus user with the client software **400-c** (in particular, the user interface module **405** allows displaying information on the display device, and receiving user input data/commands through the keyboard and the pointing device).

An application engine module **410** manages operations for interacting with a server software (running on the server **115),** searching digital copyright-protected contents, downloading them, enabling the fruition by the borrower of a borrowed copyright-protected content, particularly monitoring the borrowing time in order to give back a borrowed digital copyright-protected content to the loaner that loaned it or to have a loaned copyright-protected content given back.

The application engine module **410** cooperates with an enforcement module **415** that manages the fruition of the borrowed digital copyright-protected content (printing, copying, pasting, etc.) according to what allowed by the owner of the copyright.

A crypto-engine module **420** manages operations of encryption/decryption of files related to digital copyright-protected contents.

A service daemon module **430** is provided that allows on certain port the digital contents sharing service.

A server computer program (server software) **400-s** is installed on the server **115** (and in general on any server of the system of server that implements the digital contents sharing service). **Figure 4B** schematically shows in terms of functional blocks the main modules of a server software according to an embodiment of the present invention. A service daemon module **430** is provided that allows the digital contents sharing service on certain communication ports of the server. A management and control module **435** enables a system administrator to interact with the server software. A crypto-engine module **440** manages the operations of encryption/decryption of files related to digital copyright-protected contents to be exchanged preserving the copyrights. A business logic module **445** implements the business logic of the service; in particular, it manages searches of digital copyright-protected contents, particularly in response to requests from subscribers, it authenticates users, and it manages billing procedures, if any.

A recovery module **450** manages the operations for the restitution of the loaned digital copyright-protected contents to the loaner thereof, *i*.*e*. the re-establishment of the possibility of fruition of a loaned digital copyright-protected content by the loaner.

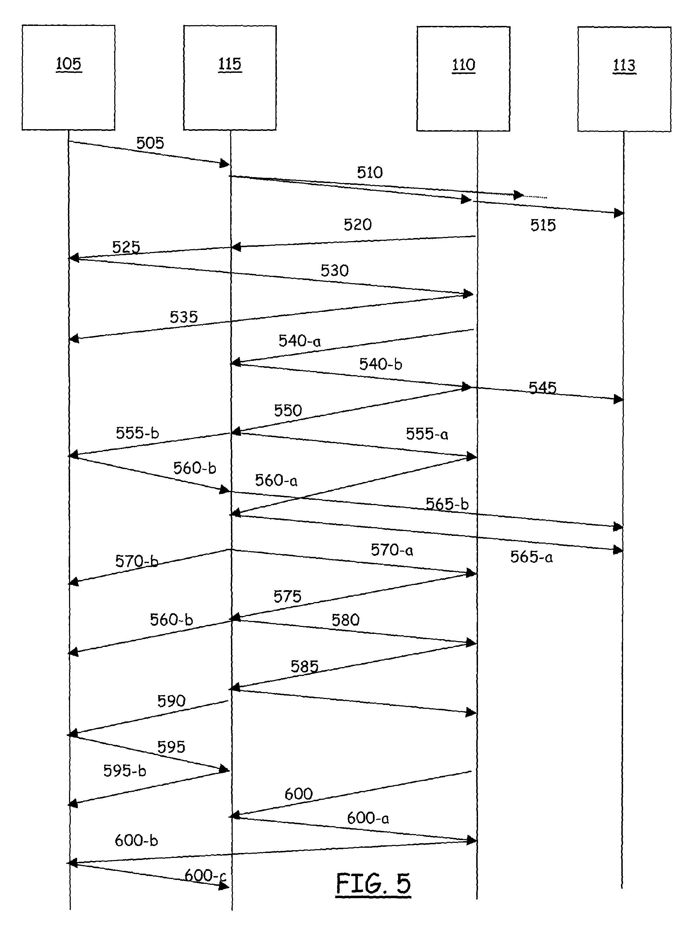

**Figure 5** schematically shows, in an embodiment of the present invention, the main actions performed by the different players (borrower's data processing system, server, loaner's data processing system) in a phase of search, localization and borrowing of a copyright-protected content.

It is intended that, in order to exploit the digital copyright-protected contents on-line sharing services, users may have to preliminary subscribe to a service center, *e*.*g*. the server 115. At the subscription, users will be assigned a unique identifier. Also, at the subscription, users may receive additional details of the system of servers that implements the sharing service.

The borrower, using the client software **400-c** running on his/her data processing apparatus **105,** sends to the server **115** a query for searching in the data network **120** a desired digital copyright-protected content he/she wishes to borrow (action **505).** A query is a message that is sent in multicast to (the data processing apparatuses of) all the subscriber of the service (at least to those that, at the moment the query is issued, are on-line). A query message may include search criteria specified by the borrower (for example, keywords he/she entered for identifying the searched content); the query message may also include information about the requested file download bandwidth. The query may be in clear text or encrypted with the public encryption key of the server **115** or with the public encryption key of the system of servers including the server **115.**

The (server software **400-s** of the) server **115** receives the query message from the borrower's data processing apparatus **105.** In a distributed solution, the server **115** propagates the query message to all the subscribers of the service (action **510),** among which there is the data processing system **110** of the loaner. It is again pointed out that although only one server **115** is considered in the exemplary scenario of **Figure 1****,** for the sake of simplicity, a system of two or more servers like the server **115** may be provided, each server serving its own subscribers; in this case, the server **115** serving the borrower **105,** in addition to propagating the query message to all its service subscribers like the loaner **110,** also propagates the query message to the other servers of the server system. In a non-distributed solution, the server **115** propagates the query message to the other servers of the server system, and checks an internal table to assess if one or more of the subscribers of the service in the sub-network managed by the server **115** have the desired copyright-protected content; if the server **115** finds that at least one of its subscribers has the requested copyright-protected content, the server propagates the query message only to this or these subscribers (action **510),** for example to the data processing system **110** of the loaner depicted in **Figure 1****.** After receiving an indication of availability for sharing the copyright-protected content by the subscriber(s), the server **115** sends to the borrower a queryhit message with an indication of all the subscribers found (action **525)** that answered with a query-hit message (action **520).**

The query message that is propagated by the server **115** may include a digital authentication certificate of the server **115;** the server's authentication certificate may include a public encryption key of a public-private encryption key pair univocally assigned to the server **115,** for example by the certification authority **113.**

In a non-distributed solution, the client software **400-c** on the data processing apparatuses of the subscribers to the service receives the query message and analyzes it. If the client software **400-c** on the data processing apparatuses of the subscribers that received the propagated query message determines, based on the search criteria specified in the query message, that the subscribers have the digital copyright-protected content the borrower is looking for, they start a server authentication procedure. The authenticity of the digital authentication certificate of the server **115** may be assessed, inquiring the server of the certification authority **113** that issued the authentication certificate to the server **115** (action **515).** If the server digital authentication certificate's authenticity is not ascertained, the query message is discarded; if instead the authenticity of the server's digital authentication certificate is ascertained, the client software **400-c** of the data processing apparatuses of the potential loaners of the requested digital content, like, in the herein considered example, the loaner **110** of **Figure 1****,** replies to the query message (action **520).** The reply message (hereinafter referred to as "queryhit" message) sent by the client software **400-c** of the generic data processing apparatus of the subscriber that have the requested digital copyright-protected content (like the data processing apparatus **110** in **Figure 1****)** is a unicast message that is sent back to the server **115** of the borrower (either directly or through another server of the server system) or directly to the borrower. The queryhit message contains information adapted to enable the client software **400-c** on the data processing apparatus of the borrower and that of the potential loaner performing the transaction for the loan of the digital copyright-protected content. In particular, the queryhit message may include:
- a field containing information about the number of files present on the data processing apparatus of the potential loaner and matching the search criteria included in the query message;
- a field containing information about the number of records, present in a field of the queryhit message that contains records related to the files matching the search criteria;
- in case the server **115** of the borrower receives the queryhit message from another server of the server system, a field containing information about the IP (Internet Protocol) address (and/or other information suitable to univocally identify that other server in the data network **120** - this may be useful for enabling the communication in presence of firewalls) and the number of the communication port of that other server;
- a field containing information about the transmission bandwidth that the data processing apparatus of the potential loaner or of the other server of the server system can sustain for downloading the requested content.

Each record included in the queryhit message may include a record field specifying the size of the file (matching the search criteria) the record relates to, a record field specifying a file index, used by the client software **400-c** of the potential loaner to univocally identify the file in a local database of shared contents, a record field specifying the file name, possibly a record field specifying a name of a server to which the potential loaner has subscribed.

The (client software **400-c** of the) borrower **105** receives the queryhit messages (action **525)** from the servers **115** or from one or more potential loaners **110,** and it can make a ranking of the potential loaners based on filters. The borrower may select, among the (sorted in order of ranking) list of potential loaners, that or those from whom he/she prefers to receive the digital copyright-protected content to be borrowed; for example, the choice of the potential loaner may be based on the download speed.

The client **400-c** of the borrower sends a message (action **530)** to the client **400-c** of the elected potential loaner, and, if it receives from such loaner a confirmation to this message (action **535),** it starts the procedure for downloading the file(s) of the requested digital copyright-protected content, otherwise it tries with the second elected loaner, and so on.

Meanwhile, the elected potential loaner **110,** after sending the confirmation to the borrower **105,** may request the server's client software **400-s** to send a valid digital authentication certificate, useful to authenticate the server **115** at the certification authority **113** (action **540-a)** (as mentioned in the foregoing, the server's authentication certificate may have been included in the query message sent to the potential loaner **110).** The potential loaner **110** verifies the authenticity of the digital authentication certificate of the server; in order to verify the authenticity of the authentication certificate received from the server (action **540-b),** the potential loaner **110** may inquire the server **113** of the certification authority that issued the certificate (action **545).** If the authenticity of the server's digital authentication certificate is not ascertained, the potential loaner **110** may stop the download procedure or reschedule it with another server of the server system. If instead the authenticity of the server's authentication certificate is ascertained, the potential loaner **110** sends to the server the message informing the server of the availability for the sharing of the digital content.

Upon receipt of a message indicating the availability for the digital content sharing from the client software of a potential loaner (directly or *via* another server of the server system) (action **550),** the server **115** of the borrower may request to the client software **400-c** on the data processing apparatus of the potential loaner to send a valid digital certificate of ownership of the copyright-protected content to be shared, and its digital authentication certificate (action **555-a)** (alternatively, this information may be already included in the message indicating the availability for sharing), necessary to assess that the potential loaner is a legitimate owner or temporary detainer of the requested digital copyright-protected content (for example, because he/she regularly bought the digital content, or has borrowed it from another legitimate owner/detainer). As mentioned in the foregoing, the digital certificate of ownership is a unique file that is created using a unique identifier of the user who bought the digital copyright-protected content, and that allows third parties assessing that the user is the unique and legitimate owner of the copyright-protected content.

The client software **400-c** on the data processing apparatus of the potential loaner sends to the server 115 the requested digital certificate of ownership (action **560-a).** The digital certificate of ownership sent to the server **115** may include a public encryption key of a public-private encryption key pair univocally assigned to that subscriber, and/or a combination of the information contained in the sub-fields **315-1, 310-4, 315-5** and **310-1** of the file structure described in connection with **Figure 3****.**

The server **115** verifies the authenticity of the digital certificate of ownership received by the client software **400-c** of the potential loaners; in order to verify the authenticity of the digital certificate of ownership received from the potential loaners, the server **115** may inquire the server of the certification authority **113** that issued the certificate (action **565-a).**

The server **115** then contacts the client software **400-c** on the data processing apparatus **105** of the borrower requesting it to send a valid digital authentication certificate (action **555-b)** (the borrower's digital authentication certificate may have been included in the query message his/her client software has sent to the server **115).** The server **115** verifies the authenticity of the digital authentication certificate received by the client software **400-c** on the data processing apparatus of the borrower (action **560-b);** in order to verify the authenticity of the digital authentication certificate received from the borrower the server **115** may inquire the server of the certification authority **113** that issued the certificate (action **565-b).**

If the authenticity of the borrower's digital authentication certificate is not ascertained, the indication of the availability for the digital content sharing received from the client software of the potential loaner is discarded by the server **115.** If instead the authenticity of the borrower's digital authentication certificate is ascertained, the server **115** starts the digital content sharing procedure and can send to the loaner **110** a temporary encryption key, encrypted with the public encryption key of the loaner 110 (in order to exchange the temporary key it is also possible to use some protocols like Diffie-Hellman (D-H) key exchange protocol or the Diffie-Hellman-Merkle key exchange protocol; this encryption key is used in order to increase the security level and to speed up the process of file recovery in case of uncompleted download (for example, a generic server of the server system, in case of recovery, can give the temporary decryption key to the client software **400-c** on the data processing apparatus **110** of the loaner in order to recover its own file) or send the common public encryption key of the system of servers and/or the public encryption key of the server **115.**

Let it be assumed that the borrower chooses to borrow the desired digital copyright-protected content from the loaner **110.** The server **115** then contacts the client software **400-c** on the data processing apparatus **110** of the loaner, and starts a procedure for the download of the digital copyright-protected content (action **570-a).** Then, the server **115** contacts the client software **400-c** on the data processing apparatus **105** of the borrower, that starts a procedure for the download of the digital copyright-protected content (action **570-b).** In an embodiment of the present invention, the procedure involves the following actions:
- the client software **400-c** on the data processing apparatus **110** of the loaner encrypts the file or files of the digital copyright-protected content with the public encryption key of the server 115 or/and with the common public encryption key of the server system, or/and with a temporary encryption key given by the server **115,** and it may send to the server **115** a confirmation of the successful completion of this operation (action **575);** the entire file or files of the digital copyright-protected content to be loaned can be divided, split in file chunks, useful in particular to exploit a multi-source download approach (if the download mode is direct, and does not make use of the server **115** as a storage point, the client software **400-c** on the data processing apparatus **110** of the loaner encrypts the file or files of the digital copyright-protected content with the public encryption key of the borrower **105,** and it may send to the server **115** a confirmation of the successful completion of this operation - action 575). If the procedure of encryption is completed with success, the client software **400-c** on the data processing apparatus **110** of the loaner deletes its own copy encrypted with its public encryption key (alternatively, the client software **400-c** on the data processing apparatus **110** of the loaner may use a virtual encrypted drive in order to store and manage all files);
- the server **115** may send to the client software **400-c** on the data processing apparatus **110** of the loaner a confirmation that the download of the encrypted file or files of the digital copyright-protected content can start (action **580);**
- if the download is not direct (*i*.*e*., not directly performed from the data processing system of the loaner to that of the borrower), the client software **400-c** on the data processing apparatus **110** of the loaner uploads to the server **115** the encrypted file or files (encrypted with the public encryption key of the server **115** or with the common public encryption key of the server system or with a temporary encryption key given by the server **115)** of the digital copyright-protected content (action **585).** On the data processing apparatus **110** of the loaner, a local copy of the file or files of the digital copyright-protected content encrypted with the public encryption key of the server **115** (or/and with the common public encryption key of the server system or/and with a temporary encryption key given by the server **115)** may be retained; this local copy is however not exploitable by the loaner **110,** because it is encrypted and the loaner does not possess the private encryption key necessary for decrypting the encrypted file or files of the digital copyright-protected content; the server **115** receives the encrypted file or files of the digital copyright-protected content, encrypted with a public key paired to a private encryption key it possesses; upon successful completion of the download of the encrypted file or files of the copyright-protected content, the server **115** may send to the client software **400-c** on the data processing apparatus **110** of the loaner a confirmation of receipt. The server **115** then decrypts the received encrypted file or files of the digital copyright-protected content using the proper private decryption key available thereat. The server **115** then adds to the decrypted file or files of the digital copyright-protected content a time stamp, with the current date and time, and then encrypts the file or files of the digital copyright-protected content with the public encryption key of the borrower **105,** or with a temporary encryption key. The encrypted file or files of the digital copyright-protected content are then downloaded to the data processing apparatus **105** of the borrower (action **590);** the client software **400-c** on the data processing apparatus **105** of the borrower downloads from the server **115** the encrypted file or files of the digital copyright-protected content, encrypted with the public encryption key of the borrower, and decrypts them using the borrower's private encryption key, or the temporary encryption key. Upon successful completion of these operations, the client software **400-c** on the data processing apparatus **105** of the borrower may send to the server **115** a receipt confirmation (action **595);**
- if the download is direct from the data processing apparatus **110** of the loaner to the data processing apparatus **105** of the borrower, the client software on the data processing apparatus **110** of the loaner may upload to the server **115** only the encrypted chunk of the file or files of the digital copyright-protected content including the information adapted to univocally identify the digital certificate of ownership of the loaner (action **600).** On the data processing apparatus **110** of the loaner, a local copy of such file chunk may be retained, encrypted with the public encryption key of the server **115,** or/and with the common public encryption key of the server system or/and with a temporary encryption key given by the server **115;** this local copy is however not exploitable by the loaner **110,** because it is encrypted and the loaner does not possess the private encryption key necessary for decrypting the encrypted file chunk; the server **115** receives the encrypted file chunk, and it may send to the client software **400-c** on the data processing apparatus **110** of the loaner a confirmation of receipt. The server **115** then decrypts the received encrypted file chunk using the proper private decryption key. The server **115** then adds to the decrypted file chunk a time stamp, with the current date and time, and then encrypts the file chunk with the public encryption key of the borrower **105** and creates a copy encrypted with the public encryption key of the server system or with the temporary encryption key. The encrypted file chunk is sent to the data processing apparatus **110** of the loaner (action **600-a).** The encrypted file chunk is then downloaded by the data processing apparatus **105** of the borrower (action **600-b);**
- if the download is not direct from the data processing apparatus **110** of the loaner to the data processing apparatus **105** of the borrower, the client software **400-c** on the data processing apparatus **105** of the borrower downloads from the server **115** the encrypted file or files of the digital copyright-protected content, encrypted with the public encryption key of the borrower, and decrypts them using the borrower's private encryption key (action **595-b).** Upon successful completion of these operations, the client software **400-c** on the data processing apparatus 105 of the borrower may send to the server **115** a receipt confirmation; a copyrights activation procedure is embedded in the file chunk (sub-field **315-1** of the file structure of **Figure 3****)** including the copyright sent to the borrower: the server **115,** before sending the file chunk with the copyright, automatically activates it (as discussed below) to make the copyright-protected content usable by the borrower;
- if the download takes place directly from the data processing apparatus **110** of the loaner to the data processing apparatus **105** of the borrower, the client software **400-c** on the data processing apparatus **105** of the borrower downloads from the client software **400-c** on the data processing system **110** of the loaner the encrypted file or files of the digital copyright-protected content, encrypted with the public key of the borrower, and decrypts them using the borrower's private encryption key. Upon successful completion of these operations, the client software **400-c** on the data processing apparatus **105** of the borrower may send to the server **115** and to the loaner **110** a receipt confirmation; upon receipt of the confirmation, the client software **400-c** on the data processing apparatus **110** of the loaner sends to the borrower the file chunk including the copyright, encrypted with the public key of the borrower; in order to activate the possibility of fruition of the borrowed digital copyright-protected content, this file chunk may need to be sent to the server **115** (action **600-c)** for a further activation.

The activation procedure may consist in manipulating the sub-fields **315-5** and **315-1** of the file structure shown in **Figure 3****,** using information about the borrower **105** (for example, its device identifier, the borrower's public encryption key) and the information in the sub-fields **310-1** and **310-4,** in order to enable the fruition of the digital copyright protected content only by the borrower. Only if the information in the sub-fields **315-5, 315-1, 310-4** and **310-1** is consistent the fruition of the borrowed digital copyright-protected content is possible. A possible implementation is that these four sub-fields are combined to generate a temporary encryption key that is used to decrypt the payload content. In alternative implementations, all the sub-fields or only a part thereof may be used. The server **115** may maintain a table with the indication of which digital copyright-protected content is at a certain time activated and used by a borrower.

More generally, the aim of the activation procedure is that of un-blocking and re-encoding the part of the file or files containing data related to the rights to fruition thereof, in order to enable the fruition of the borrowed digital copyright-protected content. In particular, the data contained in the sub-fields **315-5** and **310-1** are modified and encrypted in such a way that the borrowed digital copyright-protected content can be fruited by a user.

In case of uncompleted download (for example because the connection falls down, or the download time expires, or the file is corrupted), if the file chunk with the copyright has not yet been sent, the recovery procedure is instantaneous, otherwise the server **115** checks if the activation has been done or not: in the affirmative case, the file cannot be recovered by the loaner until the TTL is elapsed or the file is given back by the borrower.

Let it be assumed that the copyrighted-protected content is composed by several chunks, one of them including the information adapted to univocally identify the digital certificate of ownership of the loaner and all the copyright information, necessary to activate the possibility of fruition of the content by the borrower.

Once the received file or files are decrypted, and the copyright activation procedure is completed, the borrowed digital copyright-protected content can be fruited by the borrower. The fruition of the digital copyright-protected content by the borrower is mediated and controlled by the client software **400-c** running on his/her data processing apparatus **105.** In particular, the client software **400-c,** reading the properties of the file or files **(****Figure 3****)** containing the borrowed digital copyright-protected content, governs the accomplishment by the borrower of operations like selecting, copying, pasting the whole or parts of the digital copyright-protected content, performing an OCR of the digital copyright-protected content, printing the digital copyright-protected content, making printouts of the on-screen display of the digital copyright-protected content, the specific operations depending on the nature of the content.

In a similar way, the borrower may sub-loan the borrowed digital copyright-protected content to other users. In this case, the server **115,** before allowing sub-loans, checks the sub-field **315-4** in order to assess if sub-loans are allowed: if sub-loans are not allowed, the server can manage the restitution of the digital copyright-protected content to the legitimate owner, and ask for a new borrowing procedure to be performed; if sub-loans are allowed, the server **115** can start a borrowing procedure, increasing the value in the sub-field **310-3.**

The client software **400-c** on the data processing apparatus **105** of the borrower also monitors the borrowing time of the borrowed digital copyright-protected content, and manages the restitution thereof to the legitimate owner when the borrowing time expires.

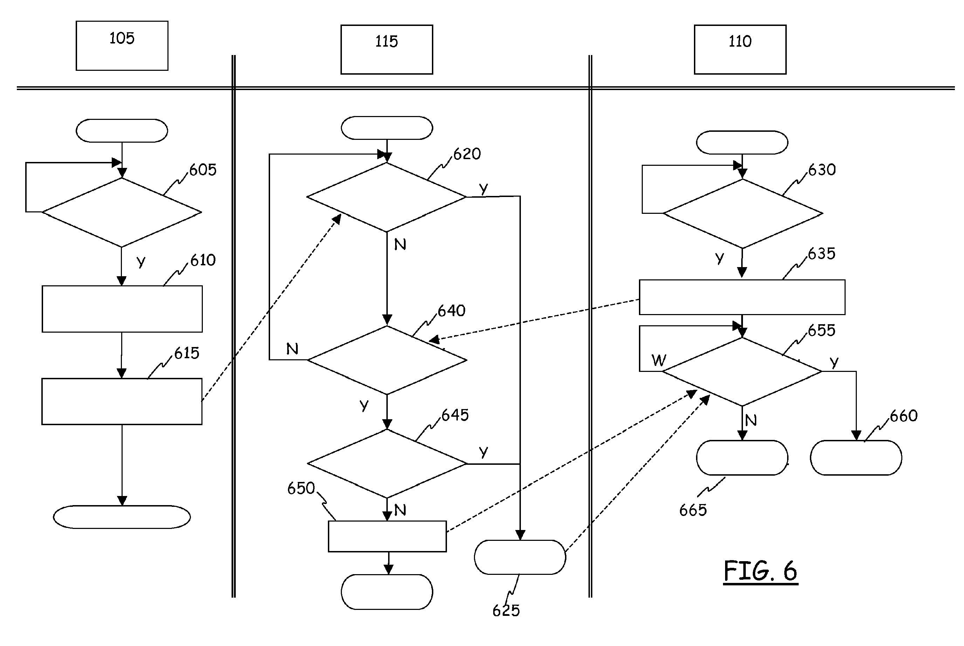

According to an embodiment of the present invention, a procedure for the restitution of the borrowed digital copyright-protected content is schematized in the flowchart of **Figure 6****.**

When the client software **400-c** on the data processing apparatus **105** of the borrower detects that the borrowing time of the digital copyright-protected content is expired (exit **Y** of decision block **605),** it deletes from the file system of the borrower's data processing apparatus **105** the file(s) related to the digital copyright-protected content (block **610),** and informs the server **115** of the deletion of the file(s) (block **515).** The digital copyright-protected content is from now on no longer available for fruition by the borrower.

The server **115** monitors (decision block **620)** the reception of the confirmation of deletion of the file(s) related to the digital copyright-protected content from the borrower. When such a file(s) deletion confirmation is received (exit branch **Y** of decision block **620),** the server **115** starts a procedure (block **625)** for re-establishing the possibility of fruition of the digital copyright-protected content by the loaner.

The client software **400-c** on the data processing apparatus **110** of the loaner also monitors the loan time of the digital copyright-protected content (decision block **630).** When the client software **400-c** on the data processing apparatus **110** of the loaner detects that the loan time of the digital copyright-protected content is expired (exit **Y** of decision block **630),** it sends to the server **115** (or to any other server of the server system) a request of re-establishment of the possibility of fruition of the loaned digital copyright-protected content (fruition re-establishment request) (block **635).**

The server **115** monitors the reception of fruition re-establishment requests from the loaners (decision block **640).** When the server **115** receives the fruition re-establishment request from the loaner **110** (exit branch **Y** of decision block **640),** it ascertains whether the requesting loaner is entitled to the re-establishment of the possibility of fruition of the loaned digital copyright-protected content (decision block **645);** this involves for example assessing whether the loan time has expired, and ascertaining that the requesting loaner is the legitimate owner of the loaned copy of the digital copyright-protected content.

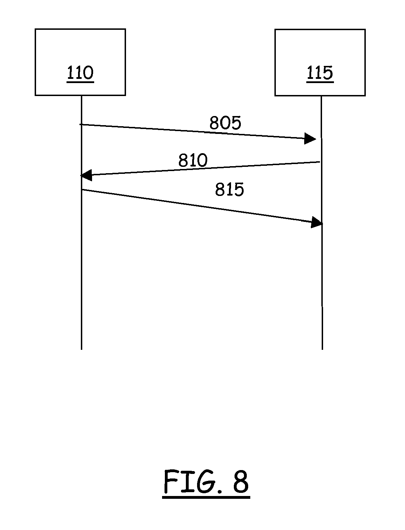

**Figure 8** schematically shows a possible implementation of the decision block **645,** in an embodiment of the present invention; in particular, the main actions performed by the different players (server and loaner's data processing system) in a phase of legitimating the right of re-establishment of the digital copyright-protected content by the loaner.

The loaner, using the client software **400-c** running on his/her data processing apparatus **110,** sends to the server **115** a fruition re-establishment request sending the digital certificate of ownership of the loaned digital copyright-protected content, or a portion thereof, and/or other authentication information, for example the information contained in the sub-fields **310-4** and **315-1** and/or **315-5** of the file structure of **Figure 3** (action **805).**

Upon receipt of the fruition re-establishment request from the client software **400-c** of the loaner, the server **115** verifies if there are no other activations of this file, or no other users that are using the file or files related to that digital copyright-protected content; to do this, the server **115** may perform a request to a local or distribute database where a table is kept of the loaned digital copyright-protected contents, or, using the sub-field **315-5,** it may check if this digital copyrighted protect content has been released by the borrower **105** (for example by identifying that digital copyright-protected content in the table and ascertaining whether it is still used by the borrower).

If no other activation procedures are in progress and no other devices (of borrowers) are using this digital copyright-protected content, the server **115** sends to the client software **400-c** on the data processing apparatus **110** of the loaner a message announcing the pre-start of a fruition re-establishment procedure, including a random code or number, and waits for the answer from the client **400-c** on the data processing apparatus **110** of the loaner; this message is preferably encrypted with the public encryption key of the legitimate owner of the digital copyright-protected content, present in the sub-field **310-4** (action **810).**

Upon receipt of the fruition re-establishment pre-start message from the server, the client software **400-c** on the data processing apparatus of the loaner **110** sends the answer encrypted with a public encryption key of the server, or with a temporary encryption key given by the server, or with the common public encryption key of the system of servers (action **815).**

Back to the flowchart of **Figure 6****,** in case the server **115** ascertains that the requesting loaner is not entitled to the re-establishment of the possibility of fruition of the loaned digital copyright-protected content (exit branch **N** of decision block **645)** the server **115** sends a deny to the client software **400-c** on the data processing apparatus **110** of the loaner (block **650).** In case instead the server **115** ascertains that the requesting loaner is entitled to the re-establishment of the possibility of fruition of the loaned digital copyright-protected content (exit branch **Y** of decision block **645),** the server **115** starts the procedure (block **625)** for re-establishing the possibility of fruition of the digital copyright-protected content by the loaner.

The client software **400-c** on the data processing apparatus **110** of the loaner waits for receiving an answer from the server **115** (decision block **655,** exit branch **W);** a maximum wait time may be set, after which the client software **400-c** on the data processing apparatus **110** of the loaner may re-send the re-establishment request, possibly for a maximum predetermined number of times.

When the client software **400-c** on the data processing apparatus **110** of the loaner receives an answer from the server **115,** it assesses whether the answer to the re-establishment request is positive (exit branch Y of decision block **655)** or negative (exit branch **N** of decision block **655).** In the affirmative case, the client software **400-c** on the data processing apparatus **110** of the loaner starts a procedure (block **660)** for the re-establishment of the possibility of fruition of the loaned digital copyright-protected content. In the negative case, the client software on the data processing apparatus **110** of the loaner starts a procedure (block **665)** for managing the conflict.

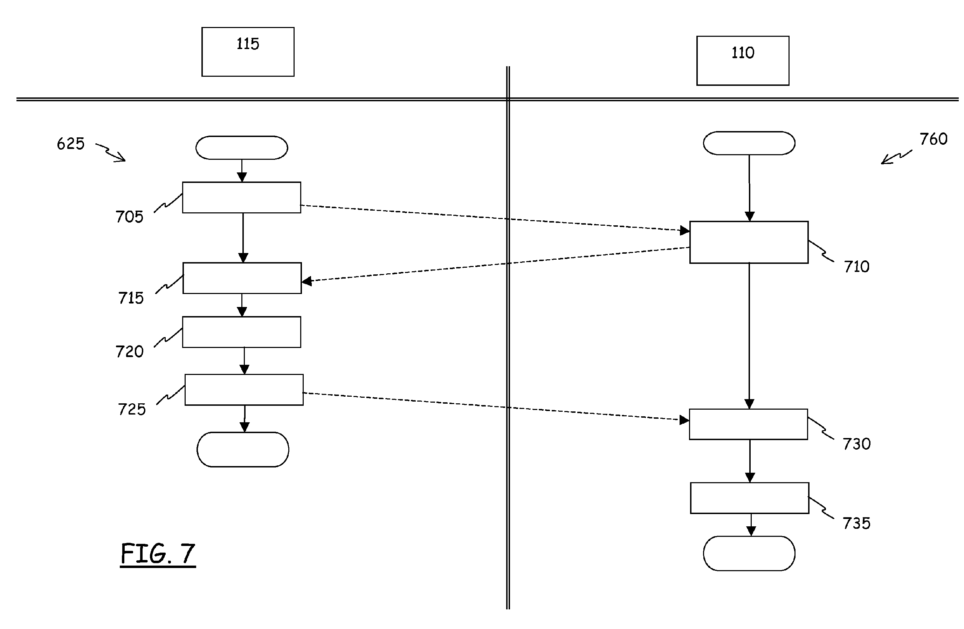

The schematic flowchart of **Figure 7** depicts a procedure according to an embodiment of the present invention for re-establishing the possibility of fruition of a loaned digital copyright-protected content by the loaner.

The server **115** asks the client software **400-c** on the data processing apparatus **110** of the loaner to send the locally-stored file(s) of the loaned digital copyright-protected content encrypted with the public encryption key of the server or with the temporary encryption key given by the server, or with the common public encryption key of the system of servers (block **705).**

The client software **400-c** on the data processing apparatus **110** of the loaner receives the request from the server **115** and sends thereto the encrypted file(s) of the digital copyright-protected content (block **710).** The client software **400-c** on the data processing apparatus **110** of the loaner may also send the loaner's public encryption key.

The server **115** receives the encrypted file(s) (block **715)** and, having assessed that there are no pending activations and that the loaner **110** is the legitimate owner (according to the procedure described in connection with **Figure 8****),** decrypts it(them) using the server's private decryption key or the correct key (block **720).**

The server **115** then encrypts the decrypted file(s) using the public encryption key of the loaner, and sends to the client software **400-c** on the data processing apparatus **110** of the loaner the encrypted file(s) (block **725).**

The client software **400-c** on the data processing apparatus **110** of the loaner receives the file(s) encrypted with the loaner's public encryption key and decrypts it(them) using the private decryption key of the loaner (block **730).**

Then, the client software **400-c** on the data processing apparatus **110** of the loaner deletes the local copy of the file(s) encrypted with public encryption key of the server **115.**

The loaner has thus received the loaned copyright-protected content back, and can use it, or loan it to other users.

In the described procedure for the restitution of the borrowed digital copyright-protected content the case has been considered that the borrowing time expires. However, nothing prevents the borrower from giving back the borrowed digital copyright-protected content to the loaner before the end of the borrowing time. Same actions as described above apply also to this case, with the difference that, at the data processing apparatus **105** of the borrower, the procedure for giving back the digital copyright-protected content is triggered by a command by the borrower, instead of by the assessment (made by the client software **400-c)** that the borrowing time has elapsed.

The described procedure for the restitution of the borrowed digital copyright-protected content applies in the case both the borrower and the loaner are connected to the Internet. In case the data processing apparatus **105** of the borrower is not connected to the Internet, or cannot contact the server **115** when the borrowing time lapses (or when the borrower decides to give back the digital copyright-protected content to the loaner), the client software **400-c** on the data processing apparatus **105** of the borrower deletes from the local file system the file(s) related to the borrowed digital copyright-protected content, as described before; the first time the data processing apparatus **105** reconnects to the Internet or re-establishes the connection to the server **115,** the client software **400-c** informs the server **115** of the deletion of the file(s). In case the data processing apparatus **110** of the loaner is not connected to the Internet, or cannot contact the server **115** (or any other server of the server system) when the loan time lapses, the request of re-establishment of the possibility of fruition of the loaned digital copyright-protected content is sent to the server **115** the first time the data processing apparatus **110** of the loaner reconnects to the Internet or re-establishes the contact with the server **115** (or with any one of the servers of the server system).

The borrower of a digital copyright-protected content may, if the loan conditions (as specified in the properties of the file(s) it received from the loaner, shown in **Figure 3****)** so allow and the borrowing time is not yet elapsed, sub-loan the borrowed digital copyright-protected content to third-party sub-borrowers. The sub-loan time that may be granted to the sub-borrowers has in this case an upper limit being the remaining borrowing time for the borrower.

According to the described embodiment of the invention, an asymmetric cryptography is used in the procedures for sharing digital copyright-protected contents. Asymmetric cryptography is typically used in the art for exchanging session keys, being more computing-intensive and thus slower than symmetric cryptography. In the context of the present invention, asymmetric cryptography is used for transferring data that are not a multimedia content stream (like it is in VolP and video on-demand), but a transferable entity, which is fruited only when the download thereof is completed. The use of asymmetric cryptography has the advantage of ensuring that the digital copyright-protected content cannot be illegally duplicated.

Several variations and alternatives exist to the general methodologies described in the foregoing.

For example, as already discussed in the foregoing, in an embodiment of the present invention, the download of the file(s) related to the digital copyright-protected content from the loaner's data processing apparatus **110** to the borrower's data processing apparatus **105** may be direct, taking place in a peer-to-peer fashion, and not pass through the server **115** (or any server of the server system), or it is possible to use the server **115,** or any server of the server system, only for the activation and re-establishment procedures.

The server **115** (and any server of the system of servers) may store in a local database indexes of the digital copyright-protected contents that the subscribers to the service have decided to make available for sharing with other subscribers; the client software **400-c** on the data processing apparatus of a generic subscriber (for example of the loaner **110)** may provide to the server **115** (or to any of the servers of the server system, particularly the server to which the loaner has subscribed and registered) a list of the digital copyright-protected contents that the loaner has decided to share. The generic server of the server system may locally store the complete list of the digital copyright-protected contents that all the service subscribers make available for sharing, or just the list of the digital copyright-protected contents made available by its own subscribers; in the former case, the query message received from a borrower does not need to be propagated to the client software on the data processing apparatuses of the other subscribers, or to the other servers of the server system: the generic server is able, looking at the locally stored list, to determine whether the request of the borrower can be satisfied (and identify the potential loaners), whereas in the latter case the generic server may need to propagate the query to the other servers of the server system (in case the requested digital copyright-protected content is not made available by its own subscribers). In this way, the server **115** does not need to locally store the file(s) related to the digital copyright-protected contents available for loaned, nor manage the download operations to the data processing apparatuses of the borrowers.

The loaned digital copyright-protected content may be downloaded from the data processing system of the loaner to the server, and from the server to the data processing system of the borrower, or directly (in a peer-to-peer fashion) from the data processing system of the borrower to the data processing system of the loaner, in several successive portions or chunks. All the chunks may be encrypted using the common public encryption of the system of servers (or the public encryption key of the borrower, if the download is in peer-to-peer fashion). One of the chunks, for example the last one, includes a properly manipulated version of the certificate of ownership of the copyright-protected content, and information like the loan time. The last chunk of the copyright-protected content, identified by a unique identifier, is only sent if the server, or the data processing system of the borrower, acknowledges the receipt of all the previous chunks. It is the receipt of the last chunk that enables the borrower enjoying the borrowed copyright-protected content. On the data processing system of the loaner, the copyright-protected content file(s) encrypted with the loaner's public encryption key is(are) deleted upon receipt (from the server or directly from the borrower's data processing system) of the acknowledgement of receipt of all the previous chunks. If the data processing system of the borrower does not acknowledge the receipt of the last file chunk, the data processing system of the loaner activates the procedure for the re-establishment of the possibility of fruition of the digital copyright-protected content. Alternatively, the chunk of the digital copyright-protected content with the digital certificate of ownership of the copyright-protected content, and loan time information, may be the first chunk to be downloaded.

The different portions of the digital copyright-protected content to be borrowed may also be downloaded from the data processing systems of two or more different loaners; in this case, it may happen that only one of the loaners is the legitimate owner of the loaned copy of the digital copyright-protected content: the file chunk with the digital certificate of ownership can be downloaded only from the loaner who is the legitimate owner of the copyright-protected content.

The server **115** (or any other server of the servers system) may also manage the creation, by the users or by a system administrator, of thematic virtual rooms, offering to users (having subscribed for this service) services of consultation of specific contents, which is distributed in streaming (and thus no copy of it remains on the data processing systems of the users); for example, in the case of literary works, the users may display on page of it at a time.

As discussed in the foregoing, in some invention embodiments a direct download from the loaner's data processing system to the borrower's data processing system is possible; this may in particular, but not limitatively, be useful when the loaner and the borrower have portable devices like smartphones, palmtops or the like, capable of directly interconnecting with each other. The connection between the loaner's and the borrower's data processing devices may in particular be a wireless one, or a wired one. The client software on the two user devices manages the download of the copyright-protected content and the loan of the rights to temporarily enjoy it. Two procedures are for example possible. According to a first procedure, on the device of the loaner no copy of the copyright-protected content is retained, but only a copy of the digital certificate of ownership of the copy of the digital copyright-protected content to be loaned, encrypted with a common public encryption key of the system of servers that is known to all the subscribers to the service; the file of the digital copyright-protected content and the digital certificate of ownership are encrypted, on the loaner's device, using the public encryption key of the borrower; the digital certificate of ownership is also encrypted with the common public encryption key; the file or files of the digital copyright-protected content being loaned, once uploaded to the borrower's device, is/are deleted from the loaner's device. At the end of the borrow, the two user devices manage the restitution of the file to the loaner. In a second procedure, a copy of the loaned copyright-protected content is kept on the loaner's device, encrypted with the common public encryption key of the server system; the file or files of the digital copyright-protected content, encrypted with the public encryption key of the borrower and the digital certificate of ownership encrypted with the common public encryption key of the system of servers are sent to the borrower; in this case, the restitution of the file to the loaner may be accomplished through the assistance of a server of the servers system, at the expiry of the loan time, while the activation of the file or files of the borrowed digital copyright-protected content on the part of the borrower shall be accomplished through the assistance of a server.

Users having portable devices like portable PCs, smartphones, palmtops having wireless communications capabilities may also create, using their client software, lists of requested copyright-protected contents, and lists of owned digital copyright-protected contents available for sharing with other users. When the device of a user having requested a certain digital copyright-protected content enters in the communication range of the device of a user having that copyright-protected content in the list of contents available for sharing, the two user devices may automatically set up a peer-to-peer session by which the digital copyright-protected content is downloaded to the device of the borrower from the device of the loaner, or an information exchange session wherein two or more devices exchange private information in order to set up a further peer-to-peer or server download session.

It is clear from the foregoing that the present invention is not limited to sharing digital copyright-protected contents over data networks like the Internet, but more generally the sharing may take place over any data link connection

It is also clear from the foregoing that the present invention is not limited to sharing digital copyright-protected contents between real (physical) persons or real devices, but also through virtual person or entities/device as in a virtual world (for example Second Life )

It is furthermore clear from the foregoing that with the present invention it is possible to create virtual communities in order to share different kinds of contents.

Also, by means of the present invention it is possible to manage multicast and broadcast services, if the clients are subscribers to such services (like Virtual Cinema for a limited number of people).

Moreover, with the present invention it is possible to borrow/rent, sell/buy, exchange digital copyright-protect contents as a whole or only parts of a digital copyright-protected content (for example only one or more chapters of a book, one or more music files of an album, and the like).

A reputation management system may also be set up, for reporting actions and opinions, and, in response to the reports, creating a feedback loop, in order to increase the trust in the system/users of the system.

The digital copyright-protected contents may be originally bought from a distributor entity, having one or more server apparatuses devoted to the re-selling of the digital copyright-protected contents under authorization of the copyright owner (like for example a major or a publisher). The distributor may have copies of the digital copyright-protected content encrypted with a public encryption key of the distributor; when a user buys a copy of the digital copyright-protected content from the distributor, the latter decrypts that copy of the digital copyright-protected content using its private encryption key, and then encrypts the copy of the digital copyright-protected content with the public encryption key of the buyer, and transfer the encrypted file or files either on-line, or by means of a portable storage support like a memory card or USB key; the buyer may thus decrypt the bought copy of the digital copyright-protected content using his/her private encryption key. In case the buyer losses the bought copy, the distributor may re-send to the buyer another copy of the digital copyright-protected content.

## Claims

1. A method of legally sharing digital copyright-protected contents, comprising:
- at a first data processing apparatus **(110)** of a first user having a digital copyright-protected content available for sharing:
- at least partly encrypting the digital copyright-protected content in a first form that is not decryptable by the first user; and
- causing the digital copyright-protected content encrypted in the first form to be made available to a second user wishing to at least temporarily enjoying the digital copyright-protected content, without retaining the digital copyright-protected content in a form usable by the first user for enjoying it;
- at a second data processing apparatus **(105)** of the second user:
- receiving the digital copyright-protected content encrypted in a second form decryptable by the second user;
- decrypting the received encrypted digital copyright-protected content, and
- at least temporarily enjoying it;
- upon request of the second user or upon expiry of a predetermined time, automatically causing the digital copyright-protected content to be no longer enjoyable by the second user,
wherein after the digital copyright-protected content is no longer enjoyable by the second user, the capability of fruition of the digital copyright-protected content by the first user is automatically re-established.

2. The method of claim 1, wherein said first form is decryptable by a third data processing apparatus **(115),** the method further comprising:
- at the third data processing apparatus:
- receiving over a data transfer link from the first data processing apparatus at least a first part of the digital copyright-protected content encrypted in the first form, wherein said at least a first part includes information adapted to enable the fruition of the digital copyright-protected content,
- decrypting the received a first part of the digital copyright-protected content encrypted in the first form,
- encrypting the decrypted at least a first part of the digital copyright-protected content into the second form, and
- sending over a data transfer link the at least a first part of the digital copyright-protected content encrypted in the second form to the second data processing apparatus.

3. The method of claim 1 or 2, comprising:
- at the first data processing apparatus, sending over a data transfer link a second part of the digital copyright-protected content to the second data processing apparatus.

4. The method of claim 1, comprising:
- - at the first data processing apparatus:
- encrypting a first part of the digital copyright-protected content in the first form,
wherein said first part includes information adapted to enable the fruition of the digital copyright-protected content.;
- sending over a data transfer link to the second data processing apparatus the encrypted first part of the digital copyright-protected content and a second part of the digital copyright-protected content;
- at the second data processing apparatus:
- receiving from the first data processing apparatus the encrypted first and second parts of the digital copyright-protected content;
- sending the encrypted first part of the digital copyright protected content to a third data processing apparatus (115);
- at the third data processing apparatus:
- receiving from the second data processing apparatus the encrypted first part of the digital copyright-protected content;
- decrypting the encrypted first part of the digital copyright-protected content;
- encrypting the first part of the digital copyright-protected content into the second form, and
- sending the encrypted first part of the digital copyright-protected content encrypted in the second form to the second data processing apparatus;
- at the second data processing apparatus:
- receiving from the third data processing apparatus the encrypted first part of the digital copyright-protected content encrypted in the second form;
- decrypting the encrypted first part of the digital copyright-protected content, and
- enabling the at least temporarily enjoying of the digital copyright-protected content.

5. The method of claim 4, wherein said sending to the second data processing apparatus the second part of the digital copyright-protected content comprises having the first data processing apparatus encrypting the second part of the digital copyright-protected content in the second form, and said receiving from the first data processing apparatus the second part of the digital copyright-protected content comprises having the second data processing apparatus decrypting the encrypted second part of the digital copyright-protected content.

6. The method of any one of the preceding claims, wherein said automatically causing the digital copyright-protected content to be no longer enjoyable by the second user and re-establishing the capability of fruition of the digital copyright-protected content by the first user comprises:
- at the second data processing apparatus, at least partly encrypting the digital copyright-protected content in a fourth form that is not decryptable by the second user without retaining the digital copyright-protected content in a form usable by the second user for enjoying it;
- at the first data processing apparatus, receiving back over a data transfer link the digital copyright-protected content at least partly encrypted in a fifth form decryptable by the first user, and decrypting the received at least partly encrypted digital copyright-protected content to make it again enjoyable by the first user.

7. The method of claim 6, wherein said fourth form is decryptable by a third data processing apparatus (115), the method further comprising:
- at the third data processing apparatus, receiving over a data transfer link from the second data processing apparatus the digital copyright-protected content at least partly encrypted in the fourth form, decrypting it, encrypting the decrypted digital copyright-protected content into the fifth form, and sending over a data transfer link the digital copyright-protected content encrypted in the fifth form to the first data processing apparatus.

8. The method of any one of the preceding claims, wherein said causing the digital copyright-protected content encrypted in the first form to be made available to the second user comprises storing the digital copyright-protected content on a storage support of the second user.

9. The method of any one of the preceding claims, wherein asymmetric encryption is exploited for at least partly encrypting/decrypting the digital copyright-protected content.

10. A system for legally sharing digital copyright-protected contents, comprising:
- a first data processing apparatus **(110)** of a first user having a digital copyright-protected content available for sharing,
- a second data processing apparatus **(105)** of a second user wishing to at least temporarily enjoying the digital copyright-protected content,
- the first data processing apparatus being adapted to at least partly encrypting the digital copyright-protected content in a first form that is not decryptable by the first user without retaining the digital copyright-protected content in a form usable by the first user for enjoying it;
- the second data processing apparatus being adapted to receiving the digital copyright-protected content encrypted in a second form decryptable by the second user, decrypting the received encrypted digital copyright-protected content, and at least temporarily enjoying it;
wherein, upon expiry of a predetermined time, the digital copyright-protected content is automatically caused to be no longer enjoyable by the second user and the capability of fruition of the digital copyright-protected content by the first user is automatically re-established.

11. The system of claim 10, further comprising a third data processing apparatus **(115)** adapted to:
- receiving over a data transfer link **(120)** from the first data processing apparatus at least a first part of the digital copyright-protected content encrypted in the first form,
wherein said at least a first part includes information adapted to enable the fruition of the digital copyright-protected content.
- decrypting the received a first part of the digital copyright-protected content encrypted in the first form,
- encrypting the decrypted at least a first part of the digital copyright-protected content into the second form, and
- sending over a data transfer link the at least a first part of the digital copyright-protected content encrypted in the second form to the second data processing apparatus.

12. The system of claim 9 or 10, wherein the first data processing apparatus is further adapted to send over a data transfer link a second part of the digital copyright-protected content to the second data processing apparatus.

13. The system of claim 10, wherein:
- the first data processing apparatus is adapted to:
- encrypting a first part of the digital copyright-protected content in the first form, wherein said first part includes information adapted to enable the fruition of the digital copyright-protected content.;
- sending over a data transfer link to the second data processing apparatus the encrypted first part of the digital copyright-protected content and a second part of the digital copyright-protected content;
- the second data processing apparatus is adapted to:
- receiving from the first data processing apparatus the encrypted first and second parts of the digital copyright-protected content;
- sending the encrypted first part of the digital copyright protected content to a third data processing apparatus **(115);**
- the third data processing apparatus is adapted to:
- receiving from the second data processing apparatus the encrypted first part of the digital copyright-protected content;
- decrypting the encrypted first part of the digital copyright-protected content;
- encrypting the first part of the digital copyright-protected content into the second form, and
- sending the encrypted first part of the digital copyright-protected content encrypted in the second form to the second data processing apparatus;
- and the second data processing apparatus is further adapted to:
- receiving from the third data processing apparatus the encrypted first part of the digital copyright-protected content encrypted in the second form;
- decrypting the encrypted first part of the digital copyright-protected content, and
- enabling the at least temporarily enjoying of the digital copyright-protected content.

14. The system of claim 13, wherein the first data processing apparatus is adapted to encrypt the second part of the digital copyright-protected content in the second form, and the second data processing apparatus is adapted to decrypt the encrypted second part of the digital copyright-protected content.

15. The system of any one of claims 10 to 14, wherein said automatically causing the digital copyright-protected content to be no longer enjoyable by the second user and re-establishing the capability of fruition of the digital copyright-protected content by the first user comprises:
- at the second data processing apparatus, at least partly encrypting the digital copyright-protected content in a fourth form that is not decryptable by the second user without retaining the digital copyright-protected content in a form usable by the second user for enjoying it;
- at the first data processing apparatus, receiving back over a data transfer link the digital copyright-protected content at least partly encrypted in a fifth form decryptable by the first user, and decrypting the received at least partly encrypted digital copyright-protected content to make it again enjoyable by the first user.

16. The system of claim 15, further comprising a third data processing apparatus **(115)** adapted to receiving over a data transfer link from the second data processing apparatus the digital copyright-protected content at least partly encrypted in the fourth form, decrypting it, encrypting the decrypted digital copyright-protected content into the fifth form, and sending over a data transfer link the digital copyright-protected content encrypted in the fifth form to the first data processing apparatus.
